## Europäisches Patentamt
## European Patent Office
## Office européen des brevets

(19)

(11) Veröffentlichungsnummer : **0 144 584**
**B1**

(12)

# EUROPÄISCHE PATENTSCHRIFT

(45) Veröffentlichungstag der Patentschrift :
**02.03.88**

(21) Anmeldenummer : **84111534.8**

(22) Anmeldetag : **27.09.84**

(51) Int. Cl.⁴ : **B 65 D  83/00**, B 05 C  21/00,
B 05 C   7/02// F16B13/14,
G01F19/00

(54) **Behälter zum Ausspritzen eines Bindemittels für die Verankerung eines Befestigungselementes in einem Bohrloch.**

(30) Priorität : **15.11.83 DE 3341283**

(43) Veröffentlichungstag der Anmeldung :
**19.06.85 Patentblatt 85/25**

(45) Bekanntmachung des Hinweises auf die Patenterteilung : **02.03.88 Patentblatt 88/09**

(84) Benannte Vertragsstaaten :
**AT BE CH FR GB IT LI NL SE**

(56) Entgegenhaltungen :
**DE-A- 2 730 110**
**DE-C- 1 061 490**
**FR-A- 1 450 164**

(73) Patentinhaber : **fischerwerke Artur Fischer GmbH &
Co. KG
Weinhalde 14-18
D-7244 Tumlingen/Waldachtal 3 (DE)**

(72) Erfinder : **Fischer, Artur, Dr. h.c.
Weinhalde 34
D-7244 Tumlingen/Waldachtal 3 (DE)**

EP 0 144 584 B1

## Beschreibung

Die Erfindung betrifft einen Behälter zum Ausspritzen eines Bindemittels für die Verankerung eines Befestigungselementes in einem Bohrloch, bestehend aus einem eine Komponente des Bindemittels enthaltenden und mit abnehmbarem Verschluß geschlossenen Behältergehäuse, einer Spritzdüse und einem im Behältergehäuse verschiebbaren Kolben (DE-A-2 730 110).

Die Haltekraft herkömmlicher Befestigungselemente beruht auf der Verkeilung eines spreizbaren Teiles des Befestigungselementes im Bohrloch beispielsweise durch Eindrehen einer Befestigungsschraube. Durch das Aufspreizen entstehen allerdings Spannungen, die insbesondere in porösen und weichen Mauerwerksstoffen nur geringe Haltekräfte ermöglichen. Für solche Werkstoffe haben sich insbesondere Befestigungselemente bewährt, die durch Umspritzen mit einem Bindemittel spannungsfrei verankerbar sind. Bei einem bekannten Verankerungsverfahren dieser Art wird das Bindemittel, beispielsweise eine Zementmischung nach der Anmischung in eine Spritzvorrichtung aufgezogen und mit dieser dann ins Bohrloch eingespritzt. Für Einzelmontagen lohnt sich jedoch in der Regel nicht die Anschaffung einer solchen Spritzvorrichtung. Außerdem ist für die Anmischung des Bindemittels ein weiteres Gefäß erforderlich. Sowohl die Spritzvorrichtung als auch dieses weitere Gefäß sind sofort nach Gebrauch, bzw. bei Serienmontagen in kurzen, regelmäßigen Abständen zu reinigen, um das Einfrieren und damit das Unbrauchbarwerden der Geräte zu verhindern.

Aus der DE-OS-2 730 110 ist ein Behälter für den Einmalgebrauch bekannt. Allerdings ist dieser Behälter in der Herstellung noch sehr kostenaufwendig. Auch die Handhabung bereitet Schwierigkeiten, da zum Eindrücken des Kolbens ein stabförmiges Hilfsmittel erforderlich ist.

Ausgehend von diesem bekannten Behälter liegt der Erfindung die Aufgabe zugrunde, einen kostengünstig herstellbaren Behälter für den Einmalgebrauch zu schaffen, mit dem ohne zusätzliche Hilfsmittel ein Ausspritzen des im Behälter angerührten Bindemittels möglich ist.

Erfindungsgemäß wird dies bei einem Behälter der eingangs genannten Gattung dadurch erreicht, daß die Spritzdüse am Kolben angeordnet ist, der Kolben mit Spritzdüse als getrenntes Teil ausgebildet ist, der nur nach Abnehmen des Verschlusses in das Behältergehäuse einsetzbar ist, und die Gesamtlänge von Kolben und Spritzdüse der Innenraumhöhe des Behältergehäuses entspricht.

Das beispielsweise aus einem imprägnierten Karton oder Blech bestehende zylinderförmige Behältergehäuse enthält die Menge der einen Komponente des Bindemittels, die für eine Montage erforderlich ist. Der Boden des Behältergehäuses ist fest mit dem Mantel verbunden, während die Öffnung nach dem Einfüllen der einen Komponente mit einem luftdicht abschließenden Deckel und/oder einer Reißfolie verschlossen ist. Zum Anmischen des Bindemittels, im Regelfall einer Zementmischung, wird der Deckel bzw. die Reißfolie entfernt und die zweite Komponente — bei einer Zementmischung Wasser — eingefüllt. Nach dem Anrühren der Mischung wird der mit der Spritzdüse versehene Kolben auf die Öffnung aufgesetzt und die Düse an die Einspritzöffnung am Befestigungselement angesetzt. Durch Druck auf den Boden des Behältergehäuses dringt der Kolben in den Behälter ein und drückt dabei die Mischung durch die Spritzdüse in das Bohrloch. Da die Gesamtlänge des Kolbens mit der Spritzdüse der Innenraumhöhe des Behältergehäuses entspricht, kann die Mischung vollständig ausgespritzt werden.

In einer weiteren Ausgestaltung der Erfindung kann der Kolben eine in Richtung Spritzdüse offene napfförmige Vertiefung aufweisen, deren Füllvolumen für die andere Komponente dem Mischungsverhältnis bzw. einem ganzzahligen Teil des Mischungsverhältnisses bezüglich der Füllmenge der im Behältergehäuse enthaltenen Komponente entspricht. Durch diese Gestaltung kann der Kolben als Meßbecher für das Einfüllen der anderen Komponente verwendet werden. Da ein oder mehrere ganze Füllungen jeweils dem richtigen Mischungsverhältnis entsprechen, ist dafür gesorgt, daß stets die optimalen Eigenschaften des Bindemittels vorliegen. Dies erleichtert auch für einen Ungeübten die Durchführung des Verankerungsverfahrens.

In der Zeichnung ist ein Ausführungsbeispiel der Erfindung dargestellt.

Es zeigen:

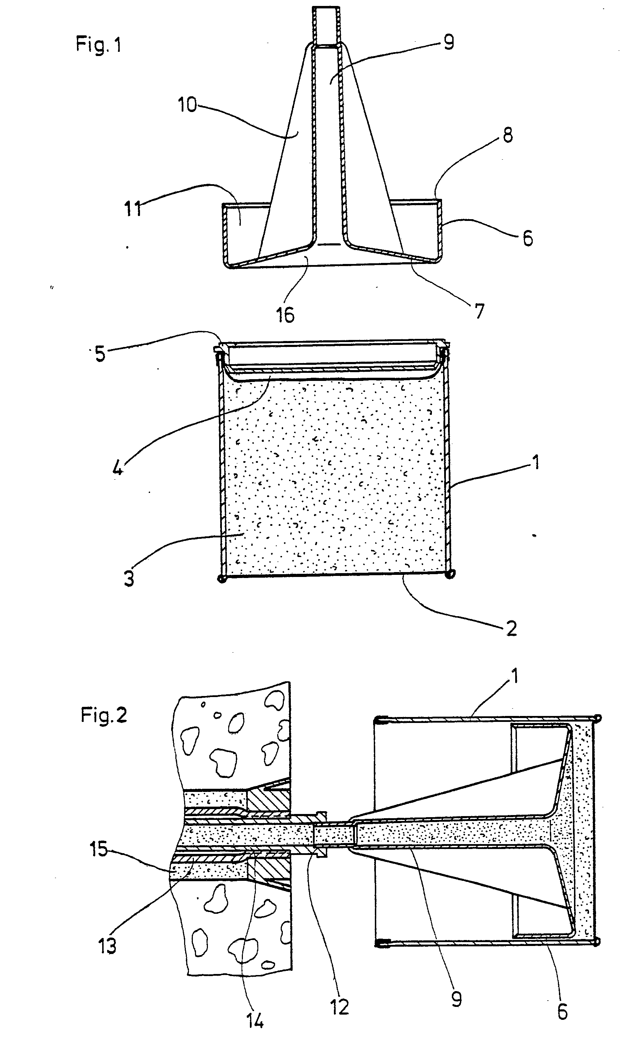

Figur 1 das mit einer Komponente gefüllte und verschlossene Behältergehäuse mit dem die Spritzdüse aufweisenden Kolben,

Figur 2 das in einer Bohrung im Mauerwerk eingesetzte Befestigungselement nach dem Ausspritzen.

Das aus einem imprägnierten Karton oder Blech bestehende Behältergehäuse 1 ist als napfförmiger Hohlzylinder mit Boden 2 ausgebildet. Nach dem Einfüllen der einen Komponente 3 in das Behältergehäuse 1 wird dieses durch eine Reißfolie 4 und/oder gegebenenfalls durch einen Kunststoffdeckel 5 verschlossen. Bestandteil des Behälters ist ferner ein napfförmig ausgebildeter Kolben 6, dessen Boden 7 die über den Rand 8 des Kolbens 6 hinausragende Spritzdüse 9 aufweist. Zur Stabilisierung der einstückig mit dem Kolben 6 im Spritzgußverfahren hergestellten Spritzdüse 9 sind mit dem Boden 7 des Kolbens 6 verbundene Rippen 10 vorgesehen. Das Fullvolumen der napfförmigen Vertiefung 11 des Kolbens 6 ist so ausgelegt, daß eine oder mehrere ganze Füllungen der anderen Komponente — bei einer Zementmischung ist diese Komponente Wasser — dem optimalen Mischungsverhältnis entspricht.

Nach dem Öffnen des Behältergehäuses 1 wird

mit dem Kolben 6 die entsprechende Menge Wasser eingeleert und durch Rühren, Schütteln oder dergleichen vermischt. Nach dem Aufsetzen des Kolbens 6 auf die Öffnung des Behältergehäuses 1 wird die Spritzdüse 9 an die Einfüllöffnung 12 des Befestigungselementes 13 angesetzt, und durch Druck auf den Boden 2 des Behältergehäuses 1 die Zementmischung durch die Spritzdüse 9 und der im Befestigungselement 13 eingesetzten Hülse 14 in das Bohrloch 15 eingespritzt. Beim Spritzvorgang wird das Behältergehäuse 1 in Richtung Mauerwerksoberfläche bewegt, während der Kolben 6 mit Spritzdüse 9 sich am Befestigungselement 13 abstützt. Da die Gesamthöhe des Kolbens und der Spritzdüse der Innenraumhöhe des Behältergehäuses entspricht, ist die Zementmischung vollständig ausspritzbar. Um einen günstigen Bindemittelfluß während des Ausspritzvorganges zu erreichen, kann der Boden des Kolbens einen Einlauftrichter 16 aufweisen.

**Patentansprüche**

1. Behälter zum Ausspritzen eines Bindemittels für die Verankerung eines Befestigungselementes (13) in einem Bohrloch, bestehend aus einem eine Komponente (3) des Bindemittels enthaltenden und mit abnehmbarem Verschluß geschlossenen Behältergehäuse (1), einer Spritzdüse (9) und einem im Behältergehäuse (1) verschiebbaren Kolben (6), dadurch gekennzeichnet, daß die Spritzdüse (9) am Kolben (6) angeordnet ist, der Kolben (6) mit Spritzdüse (9) als getrenntes Teil ausgebildet ist, der nur nach Abnehmen des Verschlusses in das Behältergehäuse (1) einsetzbar ist, und die Gesamtlänge von Kolben (6) und Spritzdüse (9) der Innenraumhöhe des Behältergehäuses (1) entspricht.

2. Behälter nach Anspruch 1, dadurch gekennzeichnet, daß der Kolben (6) eine in Richtung Spritzdüse (9) offene napfförmige Vertiefung (11) aufweist, deren Füllvolumen für die andere Komponente dem Mischungsverhältnis bzw. einem ganzzahligen Teil des Mischungsverhältnisses bezüglich der Füllmenge der im Behältergehäuse (1) enthaltenen Komponente (3) entspricht.

**Claims**

1. Vessel for injecting a fixing agent for anchoring a fastening element (13) in a drilled hole, comprising a vessel housing (1), which contains one component (3) of the fixing agent and is closed with a removable sealing member, an injection nozzle (9), and a plunger (6) that can be moved in the vessel housing (1), characterised in that the injection nozzle (9) is arranged on the plunger (6), the plunger (6) with the injection nozzle (9) is designed as a separate part which can be placed in the vessel housing (1) only once the sealing member has been removed, and the overall length of the plunger (6) and the injection nozzle (9) corresponds to the height of the inside of the vessel housing (1).

2. Vessel according to claim 1, characterised in that the plunger (6) has a cup-shaped cavity (11) which opens in the direction of the injection nozzle (9), the capacity of which cavity for the other component is in a ratio to the amount of the component (3) contained in the vessel housing (1) that corresponds to the mixing ratio or to a submultiple of the mixing ratio.

**Revendications**

1. Récipient pour injecter un liant pour l'ancrage d'un élément (13) de fixation dans un trou foré, ce récipient consistant en une enveloppe (1) de récipient contenant un composant (3) du liant et qui est fermée par une obturation amovible, en une buse (9) d'injection et en un piston (6) pouvant coulisser dans l'enveloppe (1) du récipient, caractérisé en ce que la buse (9) d'injection est montée sur le piston (6), le piston (6) est formé avec la buse (9) d'injection sous forme d'une partie séparée que l'on ne peut insérer dans l'enveloppe (1) du récipient qu'après en avoir enlevé la fermeture, et en ce que la longueur totale du piston (6) et de la buse (9) d'injection correspond à la hauteur interne de l'enveloppe (1) du récipient.

2. Récipient selon la revendication 1, caractérisé en ce que le piston (6) présente un creux (11) en forme de cuvette, ouvert dans la direction de la buse (9) d'injection et dont le volume d'emplissage correspond au rapport de mélange de l'autre composant ou correspond à une partie entière du rapport de mélange, par rapport à la quantité du composant (3) contenue dans l'enveloppe (1) de récipient.

Fig. 1

Fig. 2